# EUROPEAN PATENT APPLICATION

(11) **EP 1 707 264 A1**
(43) Date of publication of application: **04.10.2006**
(21) Application number: 06006096.9
(22) Date of filing: 24.03.2006
(51) Int. Cl.: B01J 35/00, B01J 21/06, B01J 37/02, B32B 27/08, C09D 183/02

(54) **Photocatalyst hard coat film**

(30) Priority: 29.03.2005 JP 2005095483
(71) Applicant: Lintec Corporation, Tokyo (JP)
(72) Inventor: Tanaka, Atsuhiro, Itabashi-ku Tokyo (JP); Sugaya, Tadayoshi, Itabashi-ku Tokyo (JP)
(74) Representative: Leifert & Steffan

(57) **Abstract**

There is disclosed a photocatalyst hard coat film which comprises a substrate, a primer layer, a hard coat layer and a photocatalyst layer, the three layers being laminated in turn with either surface of the substrate, wherein the primer layer has a thickness of 3.0 to 20.0µm and a linear expansion coefficient of 3.0 X 10 ⁻³ to 7.9 X 10⁻³ (K⁻¹) when the temperature thereof is raised to 100°C from 80 °C, and the hard coat layer comprises a cured silane compound and 20 to 70 parts by mass of metal oxide particulates based on 100 parts by mass of the silane compound and has a thickness of 1.2 to 1.9 *µ*m.

The photocatalyst hard coat film manifests a photocatalytic function within several days from exposure to outdoors, and is excellent in weather resistance, namely, free from cracking, whitening and peeling off over a long period of time, and is well suited for pasting on outside surface of window glass and a plastic board for windows regarding high story building and for pasting on show windows.

## Description

### BACKGROUND OF THE INVENTION

### 1. Field of the Invention

The present invention relates to a photocatalyst hard coat film. More particularly, it pertains to a photocatalyst hard coat film which manifests photocatalyic function within a short period of time when exposed to outdoors, and is excellent in weather resistance, namely, free from cracking, whitening or peeling off on a photocatalyst layer for a long period of time.

2. Description of the Related Arts There have hitherto been employed, as a film which is sticked on window glass and a plastic board for window (hereinafter sometimes referred to as " Window film "), plastic films having one or more functions of ultraviolet ray shielding, infrared ray shielding, inside peeping prevention, anti-pollution, flying fragment prevention and the like for a variety of purposes.

As one of examples, a photocatalyst Window film in which a photocatalyst layer is installed on a surface thereof is known (for instance, refer to Japanese Patent Registration No. 2756474).
A semiconductor which is typified by titanium dioxide is known to generate electrons on the conduction band when excited with rays of energy over its bandgap, further generate positive holes on the valence electron band, be imparted on a surface thereof with polarity and thus be ultrahydrophilized by the action of the electrons and / or the positive holes.

The photocatalyst Window film as mentioned above is aimed at natural cleaning of film surfaces (self cleaning) by installing a photocatalyst layer containing such a semiconductor on a surface of a Window film, pasting the film on the front surface of a glass window and the like, and utilizing the ultrahydrophilizability and anti-pollution performance through repeated solar light radiation and rainfall without cleaning off stains (organic matters) attached to a film surface, and also is aimed at anti-fog of window glass and assuring visual field in the rain.

Since the above-mentioned photocatalyst Window film is more liable to be scored at the time of pasting or cleaning, hard coat properties (scratch resistance) are required and a variety of proposals have been made therefore. That is to say, the proposals include forming a photocatalyst layer on a silicone based hard coat layer to enhance scratch resistance and adhesivity of the photocatalyst layer {for instance, refer to Japanese Patent application Laid-Open No. 91030 / 1999 (Heisei 11)} ; subjecting a silicone based hard coat layer to a corona treatment to enhance adhesivity of the photocatalyst layer in a laminate structure comprising a polycarbonate substrate, a primer layer containing ultraviolet absorber, the silicone based hard coat layer and a photocatalyst layer {for instance, refer to Japanese Patent application Laid-Open No.47584 / 2001 (Heisei 13)} blending metal oxide particulates in a silicone based hard coat layer to enhance adhesivity of the photocatalyst layer in a laminate structure comprising a substrate, a primer layer, the silicone based hard coat layer and a photocatalyst layer {for instance, refer to Japanese Patent application Laid-Open No.47584 /2001 (Heisei 13)} ; and the like.

However, any of the films thus proposed has suffered from the defect that several weeks are required until the manifestation of photocatalytic function when exposed to outdoors, and besides cracking, whitening and /or peel off takes place on the photocatalyst layer within about half a year from exposure to outdoors.

### SUMMARY OF THE INVENTION

The object of the present invention is to provide under such circumstances,a photocatalyst hard coat film which manifests a photocatalytic function within several days when exposed to outdoors, and is excellent in weather resistance, namely, free from cracking, whitening and / or peeling off over a long period of time, and which is well suited for pasting on outside surface of window glass and a plastic board for windows regarding high story building and for pasting on show windows.

Other objects of the present invention will become obvious from the text of this specification hereinafter disclosed.

In the light of such circumstances, intensive extensive research and a investigation were accumulated by the present inventors in order to achieve the above-mentioned objects. As a result, it has been discovered that cracking of a photocatalyst layer, which is caused by the substrate expansion due to hygroscopicity thereof in a laminate structure comprising a substrate, a primer layer, a hard coat layer and a photocatalyst layer, can be prevented by rendering the linear expansion coefficient and thickness of the primer layer to each fall within a specific range, and also that when metal oxide particulates are added to the hard coat layer for the purpose of enhancing adhesivity to the photocatalyst layer, a dispersant which is used to disperse the metal oxide particulates migrates to the photocatalyst layer, covers the surfaces of the photocatalyst, and thereby becomes responsible for delay of hydrophilization, but the above-mentioned phenomenon can be prevented by rendering the content of the metal oxide particulates in the hard coat layer and thickness thereof to each fall within a specific range. The present invention has been accomplished by the foregoing findings and information.

Specifically, the present invention provides the following :
1. A photocatalyst hard coat film which comprises a substrate, a primer layer, a hard coat layer and a photocatalyst layer, said three layers being laminated in turn with either surface of the substrate, wherein the primer layer has a thickness of 3.0 to 20.0 *µ* m and a linear expansion coefficient of 3.0 × 10⁻³ to 7.9 × 10⁻³ (K⁻¹) when the temperature thereof is raised to 100°C from 80 °C, and the hard coat layer comprises a cured silane compound and 20 to 70 parts by mass of metal oxide particulates based on 100 parts by mass of the silane compound and has a thickness of 1.2 to 1.9 *µ*m.
2. The photocatalyst hard coat film as set forth in the preceding item 1, wherein the substrate is a film composed of polycarbonate.
3. The photocatalyst hard coat film as set forth in the preceding item 1 or 2, wherein the primer layer is a layer which is formed of an acrylic primer.
4. The photocatalyst hard coat film as set forth in any of the preceding items 1 to 3, wherein the hard coat layer is a layer which is formed by the use of tetraalkoxysilane as a silane compound and antimony-doped tin oxide as metal oxide particulates.
5. The photocatalyst hard coat film as set forth in any of the preceding items 1 to 4, wherein the photocatalyst layer is a layer which is formed by the use of a silane compound as a binder and titanium dioxide as a photocatalyst.
6. The photocatalyst hard coat film as set forth in any of the preceding items 1 to 5, wherein a pressure sensitive adhesive layer is installed on the other surface of the substrate.

### DESCRIPTION OF THE PREFERRED EMBODIMENTS

The substrate to be used in the photocatalyst hard coat film according to the present invention is not specifically limited, but may be properly optionally selected for use from a variety of plastic films according to the situation. Examples thereof include those of polyolefinic resin such as polyethylene, polypropylene, poly-4-methypentene-1 and polybutene-1 ; polyester based resin such as polyethylene terephthalate and polyethylene naphthalate ; polycarbonate based resin ; polyvinyl chloride based resin ; polyphenylene sulfide based resin ; polyether sulfone based resin ; polyethylene sulfide based resin ; polyphenylene ether based resin ; styrenic resin ; acrylic resin ; polyamide based resin ; polyimide based and cellulose based resin such as cellulose acetate. Of these, polycarbonate resin film is particularly preferable from the aspect of weather resistance.

The thickness of the substrate is not specifically limited, but may be properly optionally selected for use according to the purpose of use from the range of usually 5 to 500 *µ* m, preferably 10 to 300 *µ* m, more preferably 10 to 200 *µ* m.
The substrate is preferably transparent, but may be colored or vapor deposited and may contain an ultraviolet absorber and a light stabilizer.

In addition, it is possible as desired to subject the substrate on either or both sides to a surface treatment for the purpose of enhancing adhesiveness to the primer layer to be installed thereon by means of an oxidation method or an unevenly patterning method. Examples of the oxidation method include corona discharge method, chromic acid treatment method (wet system), flame treatment method, hot air treatment method, ozone / ultraviolet irradiation method and the like.
Examples of the unevenly patterning method include sand blast method and solvent treatment method. The surface treatment method, which is properly optionally selected according to the type of the substrate, is preferably corona discharge method from the viewpoint of working effect and operability and the like.

In the photocatalyst hard coat film according to the present invention, a primer layer is formed on the substrate mentioned above. It is necessary that the primer layer has favorable adhesiveness to the hard coat layer to be installed thereon and also favorable adhesiveness to the above-mentioned substrate and also has a linear expansion coefficient when the temperature thereof is raised to 100°C from 80°C (hereinafter simply referred to as " linear expansion coefficient") being 3.0 × 10 ⁻³ to 7.9 × 10 ⁻³ (K⁻¹). From among the previously well known primers such as acrylic, polyester based, polyurethane based, silicone based, rubber based and the like primers, those having each a linear expansion coefficient in the foregoing range are usable, and from the standpoint of durability, adhesiveness and the like factors, an acrylic primer is suitable.

The linear expansion coefficient of the primer layer needs to fall within the above-mentioned range in order to suppress the occurrence of cracking, thus making it impossible to suppress the occurrence thereof in any of the case where the coefficient thereof is high than the upper limit or lower tan the lower limit. Particularly preferable range thereof is 3.2 × 10⁻³ to 7.8 × 10⁻³ (K⁻¹).

The primer layer may be incorporated at need with an ultraviolet absorber and / or a light stabilizer in amounts of preferably 0.01 to 10 parts by mass, particularly preferably 0.1 to 5 parts by mass based on 100 parts by mass of the primer.

In the photocatalyst hard coat film according to the present invention, it is necessary that the primer layer has a thickness in the range of 3.0 to 20.0 *µ*m, particularly 3.5 to 8.0 *µ*m in order to exhibit the effects on suppressing and buffering the expansion of the substrate, to suppress the occurrence of a crack on the photocatalyst layer, and to sufficiently exhibit the effect of a ultraviolet absorber, when contained in the primer layer.

The primer layer can be formed by a method comprising applying a coating solution composed of a proper solvent, a primer and as the case may be, a ultraviolet absorber and a light stabilizer onto a substrate by a previously well known method such as for instance, bar coat method, knife coat method, roll coat method, blade coat method, die coat method, gravure coat method or curtain coat method, and heating the resultant coating at a temperature of 80 to 160°Capproximately for 30 seconds to 5 minutes.

In the photocatalyst hard coat film according to the present invention, a hard coat layer comprising a cured silane compound and metal oxide particulates is formed on the primer layer formed in such a manner.

The silane compound is exemplified by alkoxysilane compounds and chlorosilane compounds.
Examples of the alkoxysilane compounds include tetraalkoxysilane such as tetramethoxysilane, tetraethoxysilane, tetra-n-propoxysilane, tetraisopropoxysilane, tetra-n-butoxysilane, tetraisobutoxysilane, tetra-sec-butoxysilane and tetra-tert-butoxysilane ; trialkoxysilane hydride such as trimethoxysilane hydride, triethoxysilane hydride and tripropoxysilane hydride ; dialkoxysilane hydride such as dimethoxysilane hydride, diethoxysilane hydride and dipropoxysilane hydride ; methyltrimethoxysilane ; methyltriethoxysilane; methyltripropoxysilane ; methyltriisopropoxysilane ; ethyltrimethoxysilane ; ethyltriethoxysilane ; propyltriethoxysilane ; butyltrimethoxysilane ; phenyltriethoxysilane ; γ -glycidoxypropyltrimethoxysilane ; γ-acroyloxypropyltrimethoxysilane γ -methacroyloxypropyltrimethoxysilane ; dimethyldimethoxysilane; methylphenyldimethoxysilane ; vinyltrimethoxysilane ; vinyltriethoxysilane ; divinyldimethoxysilane ; and divinyldiethoxysilane.

Examples of the chorosilane compounds include ethyldichorosilane ; ethyltrichorosilane ; dimethyldichorosilane ; trichorosilane ; trimethylchorosilane; and methyltrichorosilane.

Any of the above-cited silane compound may be used alone or in combination with at least one other species.
Among them, a cured product of hydrolysis condensate of silane compound preferably doesn't bear an organic group from the aspect of photocatalytic decomposability in the photocatalyst layer which is installed on the hard coat layer. Accordingly it is desirable to use tetraalkoxysilane, trialkoxysilane hydride or dialkoxysilane hydride as an alkoxysilane compound and completely hydrolyze.

Aside from the forgoing, the metal oxide particulates are exemplified for instance, by particulates of oxides, composite oxides, and metal-doped oxides each of metals such as Si, Ge, Sn, Al, In, Ga, Zn, Ti, Zr, Sc, Y and lanthanoids based metal (Ce, etc.). Any of the above-cited metal oxide particulates may be used alone or in combination with at least one other species.
The average particle diameter of the metal oxide particulates is in the range of preferably 1 to 10,000 nm, more preferably 10 to 500 nm, particularly preferably 20 to 200 nm from the viewpoint of curl prevention, performance of the hard coat and the like.

Prior to forming the hard coat layer, a coating solution is prepared which comprises a proper solvent, the above-cited silane comound, metal oxide particulates and as the case may be, a small amount of a hydrolysis catalyst and a dispersant for enhancing dispersibility in the solvent to be incorporated at need.
Subsequently the hard coat layer is formed by a method comprising applying the coating solution thus prepared onto the primer layer prepared in the above-mentioned manner by a previously well known method such as for instance, bar coat method, knife coat method, roll coat method, blade coat method, die coat method, gravure coat method or curtain coat method, and heating the resultant coating at a temperature of 80 to 160°C approximately for 30 seconds to 5 minutes.
A temperature set on 80°C or higher can prevent the solvent from remaining in the hard coat layer, while a temperature set on 160°C or lower can prevent the substrate from shrinking to lose smoothness. In this way it is possible to form the hard coat layer comprising a cured silane compound and metal oxide particulates, wherein the cured silane compound is formed by a sol-gal method.

In regard to the contents of the cured silane compound and metal oxide particulates in the hard coat layer, the content of the metal oxide particulates needs to be at least 20 parts by mass based on 100 parts by mass of the cured silane compound in order to prevent the hard coat layer from becoming more liable to be scored owing to worsened adhesiveness to the layer, while it needs to be 70 or less parts by mass based on 100 parts by mass of the cured silane compound in order to assure necessary hydrophilizability. That is to say, the content of the metal oxide particulates needs to be in the range of 20 to 70 parts by mass, preferably 30 to 60 parts by mass in particular. Hydrophilizing within 12 hours falls within a practical range of hydrophilizability.

It is possible to impart the hard coat layer with other function(s) such as for instance, functions of ultraviolet ray shielding and infrared ray shielding in addition to hard coat function by properly selecting the type of the metal oxide particulates in the hard coat layer. Specifically the hard coat layer is imparted with ultraviolet ray shielding function by scattering ultraviolet ray by using for instance, particulates of titanium dioxide, zinc oxide, cerium oxide, hybrid particulates formed by subjecting particulates of titanium dioxide to a composite treatment by means of iron oxide and hybrid particulates formed by coating the surfaces of cerium oxide particulates with amorphous silica.
Moreover the hard coat layer is imparted with infrared ray shielding function by using for instance, particulates of metal oxide such as titanium dioxide, silicon dioxide, zinc oxide, indium oxide, tin oxide, zinc sulfide, particularly tin oxide ATO (antimony-doped tin oxide) and ITO (indium-doped tin oxide).

In the case where the metal oxide particulates which have photocatalytic activity are used in the hard coat layer, the photocatalytic activity of the metal oxide particulates is preferably inactivated prior to use for the purpose of suppressing the deterioration due to photocatalytic action in the primer layer as the lower layer and in the photocatalyst layer as the upper layer.
The thickness of the hard coat layer needs to be in the range of 1.2 to 1.9 *µ*m, preferably 1.3 to 1.8 *µ*m.

In the photocatalyst hard coat film according to the present invention, a photocatalyst layer is formed on the hard coat layer which has been formed in the forgoing way.
The photocatalyst to be used in the photocatalyst layer is not specifically limited, but is exemplified for instance, by previously well known ones such as titanium dioxide being typical, strontium titanate (SrTiO₃), barium titanate (BaTi₄O₉), sodium titanate (Na₂Ti₆O₁₃), zirconium dioxide, α -Fe₂O₃, tungsten oxide, K₄Nb₆O₁₇, Rb₄Nb₆O₁₇, K₂Rb₂Nb₆O₁₇, cadmium sulfide and zinc sulfide. Any of the above-cited species may be used alone or in combination with at least one other species. Of these, titanium dioxide, particularly anatase type titanium dioxide is useful as a practical photocatalyst.

A method for forming the photocatalyst layer on the hard coat layer is not specifically limited, provided that the photocatalyst layer is formed with favorable adhesiveness to the hard coat layer. Usable methods are exemplified for instance, by dry methods like PVD (physical vapor deposition) method such as vacuum vapor deposition method and sputtering method, CVD (chemical vapor deposition) method and metal spraying method ; and wet method using a coating solution. Of these, the wet method is advantageous from the standpoint of its simple operability and capability of easily forming the photocatalyst layer.

The wet method is that comprising applying a coating solution containing the above-mentioned photocatalyst particulates and an inorganic binder to the hard coat layer, and subjecting the coating to a drying treatment to form the photocatalyst layer.
The inorganic binder to be used in the coating solution is not specifically limited provided that it can exhibit a binder function, but is preferably exemplified for instance, by cured silane compounds from the aspect of adhesiveness to the hard coat layer. Such silane compounds are specifically exemplified by those bearing a hydrolyable organic group including tetraalkoxysilane such as tetramethoxysilane, tetraethoxysilane, tetra-n-propoxysilane, tetraisopropoxysilane, tetra-n-butoxysilane, tetraisobutoxysilane, tetra-sec-butoxysilane and tetra-tert-butoxysilane ; trialkoxysilane hydride such as trimethoxysilane hydride, triethoxysilane hydride and tripropoxysilane hydride ; dialkoxysilane hydride such as dimethoxysilane hydride, diethoxysilane hydride and dipropoxysilane hydride. Any of the above-cited silane compounds may be used alone or in combination with at least one other species. In order to prevent cracking from occurring, an alkyltrialkoxysilane may be used in combination.

A coating solution can be prepared by adding into a proper solvent, photocatalyst particulates, the above-cited inorganic binder and a small amount of a hydrolysis catalyst.
Subsequently the photocatalyst layer can be formed by a method comprising applying the coating solution thus prepared onto the hard coat layer by a previously well known method such as for instance, bar coat method, knife coat method, roll coat method, blade coat method, die coat method, gravure coat method or curtain coat method, and heating the resultant coating at a temperature of 80 to 160°C approximately for 30 seconds to 5 minutes. A temperature set on 80°C or higher can prevent the solvent from remaining in the photocatalyst layer, while a temperature set on 160°C or lower can prevent the substrate from shrinking to lose smoothness.

In this way the photocatalyst layer comprising the photocatalyst particulates and inorganic binder is formed on the hard coat layer with favorable adhesiveness.
In this case the average particle diameter of the photocatalyst particulates is in the range of usually 1 to 1000 nm, preferably 10 to 500 nm. The content ratio of the photocatalyst particulates to the inorganic binder in the photocatalyst layer is preferably in the range of 1 : 9 to 9 : 1.
The content of the inorganic binder, when more than the foregoing range, brings about a fear that photocatalytic function is not sufficiently exhibited, whereas the content thereof, when less than the foregoing range, brings about a fear that binder function is not sufficiently exhibited. Thus more preferable content ratio thereof is 3 : 7 to 7 : 3.
The thickness of the photocatalyst layer is in the range of preferably 0.01 to 10 *µ* m, particularly preferably 0.01 to 1 *µ* m.

In the case where the photocatalyst hard coat film according to the present invention is used for the purpose of pasting on an adherend, it is possible to install a pressure sensitive adhesive layer and a releasing sheet in turn on a substrate surface opposite to the surface equipped with the hard coat layer.
The pressure sensitive adhesive which constitutes the pressure sensitive adhesive layer is not specifically limited, but may be properly optionally selected for use from previously well known pressure sensitive adhesives in accordance with the situation. Examples that are preferable from the aspect of weather resistance and the like include acrylic, urethane based and silicone based pressure sensitive adhesives. The pressure sensitive adhesive layer has a thickness in the range of usually 5 to 100 *µ* m, preferably 10 to 60 *µ* m, and may be incorporated at need, with a ultraviolet absorber or a light stabilizer when necessary.

The releasing sheet to be installed on the pressure sensitive adhesive layer is exemplified by paper such as glassine paper, coat paper and laminate paper, and a variety of plastic films coated with a releasing agent such as silicone resin. The thickness of the releasing sheet is not specifically limited, but is usually in the range of about 20 to 150 *µ* m.

The working effects and advantages of the present invention are summarized in the following. The photocatalyst hard coat film manifests a photocatalytic function within several days from exposure to outdoors, and is excellent in weather resistance, namely, free from cracking, whitening and peeling off over a long period of time, and which is well suited for pasting on outside surface of window glass and a plastic board - for windows regarding high story building and for pasting on show windows. Prior to use, the releasing sheet is peeled off, and the exposed surface of the pressure sensitive adhesive layer is brought into contact with an object to be sticked.

### Examples

In what follows, the present invention will be described in more detail with reference to working examples and comparative examples, which however shall never limit the present invention thereto.
The physical properties of the photocatalyst hard coat films prepared in the examples are measured and evaluated in accordance with the following procedures.

### (1) Linear expansion coefficient

Linear expansion coefficient is determined by heating a primer sample measuring 10 mm in length by 80 *µ* m in thickness from room temperature to 105°C under the conditions of load being 10 mN and temperature rise rate being 10°C /minute by the use of a thermal analysis instrument (manufactured by Shimadzu Corporation under the trade name " TMA-50 "), and by measuring the variation in length during the temperature rise from 80°C to 100°C

### (2) Hydrophilization time and contact angle

A surface of a photocatalyst layer is irradiated with ultraviolet rays from a BLB fluorescent lamp with 1.0 mW / cm² (black), and the period of time measured until an angle of contact with water becomes 10 degrees or less is regarded as hydrophilization time.
Contact angle is determined by dropping water droplets to sample surfaces from a micro-syringe by the use of a contact angle measuring instrument (manufactured by Kyowa Kaimen Kagaku Co., Ltd. under the trade name "CA-X 150 "), and by measuring an angle of contact with water, which is regarded as contact angle.

### (3) Accelerated weather resistance test

Accelerated weather resistance test is carried out for a sample sticked on a glass sheet having a thickness of 3 mm by the use of a Sunshine superlong-life weather meter (manufactured by Suga Testing Instrument Co., Ltd. under the trade name "WEL-SUN-HCH ") through the method stipulated in JIS A 5759 (Film for building window glass).

### (4) Crack occurring time derived from accelerated weather resistance test

By the use of an optical microscope (magnificaton of 1000), crack occurrence is checked every 100 hours of accelerated weather resistance test, and the period of time until a crack occurs is regarded as crack occurring time.

### (5) Weather resistance

For a sample obtained after conducting 1900 hours of accelerated weather resistance test, adhesiveness test and hard coat property test as stated hereunder and the above-mentioned contact angle measurement are carried out. .

### (a) adhesiveness test

Measurements are made in accordance with JIS K 5600-5-6 {Testing methods for paints Part 5 : Mechanical property of film Section 6 : Adhesion test (cross-cut test)}, and evaluations are made on the basis of the following criteria.
0 : highest adhesiveness without causing peel off
4 : lowest adhesiveness causing peel off of total coating

### (b) hard coat property test

When a surface of a photocatalyst layer is scrubbed with steel wool # 0000 and / or gauze, scoring is visually checked to evaluate on the basis of the following criteria.
⊚: no scoring on 10 times reciprocating scrubbing with steel wool # 0000
○: no scoring on 3 times reciprocating scrubbing with steel wool # 0000
Δ: scoring occurs on 3 times reciprocating scrubbing with steel wool # 0000, but no scoring on 3 times reciprocating scrubbing with gauze
× : scoring occurs on 3 times reciprocating scrubbing with gauze

### Example 1

A polycarbonate film having a thickness of 100 µm (manufactured by Asahi Glass Co., Ltd. under the trade name "Lexan 8010") was coated on one side with an acrylic resin {manufactured by Nippon Dacro Shamrock Co., Ltd. under the trade name "Solgard Primer 85B-2H18 ", solid content : 18% by mass, linear expansion coefficient: 7.71 × 10⁻³ (K⁻¹)} so that the thickness after drying became 4.0 µm by bar coat method, and thereafter the coated film was dried at 100°C for one minute to form a primer layer.
Subsequently the resultant primer layer was coated with a coating solution that had been obtained by adding 50.0 parts by mass of antimony-doped tin oxide (ATO) {manufactured by Ishihara Techno Co., Ltd. under the trade name " SNS-10B ", ATO content : 27% by mass} to 100.0 parts by mass of a silicone based hard coat agent {manufactured by Nippon Dacro Shamrock Co., Ltd. under the trade name " Solgard NP 730-0.2x ", solid content : 25 % by mass} so that the thickness after drying became 1.5 µm by bar coat method, and thereafter resultant coating layer was dried at 130°C for 5 minutes to form a hard coat layer, in which the content of the ATO was 54.0 parts by mass per 100.0 parts by mass of the cured silane compound.
Subsequently the resultant hard coat layer was coated with a coating solution that had been obtained by adding 100.0 parts by mass of titanium dioxide dispersion as the photocatalyst {manufactured by Dainippon Ink and Chemicals Co., Ltd. under the trade name "Titania Bunsantai TD-04 ", solid content : 10% by mass} to 750.0 parts by mass of an alkoxysilane solution {manufactured by Colcoat Co., Ltd. under the trade name "Colcoat p ", solid content : 2% by mass} so that the thickness after drying became 0.1 *µ* m by bar coat method, and thereafter resultamt coating layer was dried at 130°C for 5 minutes to form a photocatalyst layer.
Various performances of the photocatalyst hard coat film thus obtained were measured and evaluated. The results are given in Table 1

### Example 2

The procedure in Example 1 was repeated to prepare a photocatalyst hard coat film except that the acrylic resin {manufactured by Nippon Dacro Shamrock Co., Ltd. under the trade name " Solgard Primer 85B-2H18} was replaced by an acrylic resin {manufactured by Nippon Dacro Shamrock Co., Ltd. under the trade name "Solgard Primer 85B-4H18 ", solid content : 18% by mass, linear expansion coefficient : 3.82 × 103 (K⁻¹)}.
Various performances of the photocatalyst hard coat film thus obtained were measured and evaluated. The results are given in Table 1.

### Example 3

The procedure in Example 1 was repeated to prepare a photocatalyst hard coat film except that the blending amount of the antimony-doped tin oxide (ATO) in the coating solution for forming the hard coat layer was altered from 50.0 to 30.0 parts by mass. As a result, the content of the ATO was 32.4 parts by mass per 100 parts by mass of the cured silane compound in the hard coat layer.
Various performances of the photocatalyst hard coat film thus obtained were measured and evaluated. The results are given in Table 1.

### Example 4

The procedure in Example 1 was repeated to prepare a photocatalyst hard coat film except that the thickness of the hard coat layer was altered from 1.5 to 1.3 µm.
Various performances of the photocatalyst hard coat film thus obtained were measured and evaluated. The results are given in Table 1.

### Example 5

The procedure in Example 1 was repeated to prepare a photocatalyst hard coat film except that the thickness of the hard coat layer was altered from 1.5 to 1.8 µm.
Various performances of the photocatalyst hard coat film thus obtained were measured and evaluated. The results are given in Table 1.

### Example 6

The procedure in Example 1 was repeated to prepare a photocatalyst hard coat film except that the thickness of the primer layer was altered from 4.0 to 3.5 µm.
Various performances of the photocatalyst hard coat film thus obtained were measured and evaluated. The results are given in Table 1.

### Example 7

The procedure in Example 1 was repeated to prepare a photocatalyst hard coat film except that the thickness of the primer layer was altered from 4.0 to 6.0 µm.
Various performances of the photocatalyst hard coat film thus obtained were measured and evaluated. The results are given in Table 1.

### Comparative Example 1

The procedure in Example 1 was repeated to prepare a photocatalyst hard coat film except that the acrylic resin {manufactured by Nippon Dacro Shamrock Co., Ltd. under the trade name "Solgard Primer 85B-2H18} was replaced by an acrylic resin {manufactured by Nippon Dacro Shamrock Co., Ltd. under the trade name " Solgard Primer 85B ― 4HP18 ", solid content : 18% by mass, linear expansion coefficient : 0.56 × 10⁻³ (K⁻¹)}.
Various performances of the photocatalyst hard coat film thus obtained were measured and evaluated. The results are given in Table 1.

### Comparative Example 2

The procedure in Example 1 was repeated to prepare a photocatalyst hard coat film except that the acrylic resin {manufactured by Nippon Dacro Shamrock Co., Ltd. under the trade name " Solgard Primer 85B-2H18} was replaced by an acrylic resin {manufactured by Nippon Dacro Shamrock Co., Ltd. under the trade name " Solgard Primer 85B-2B18 ", solid content : 18% by mass, linear expansion coefficient : 7.95 × 10⁻³ (K⁻¹)}.
Various performances of the photocatalyst hard coat film thus obtained were measured and evaluated. The results are given in Table 1.

### Comparative Example 3

The procedure in Example 1 was repeated to prepare a photocatalyst hard coat film except that the blending amount of the antimony-doped tin oxide (ATO) in the coating solution for forming the hard coat layer was altered from 50.0 to 10.0 parts by mass. As a result, the content of the ATO was 10.8 parts by mass per 100.0 parts by mass of the cured silane compound in the hard coat layer.
Various performances of the photocatalyst hard coat film thus obtained were measured and evaluated. The results are given in Table 1.

### Comparative Example 4

The procedure in Example 1 was repeated to prepare a photocatalyst hard coat film except that the blending amount of the antimony-doped tin oxide (ATO) in the coating solution for forming the hard coat layer was altered from 50.0 to 80.0 parts by mass. As a result, the content of the ATO was 86.4 parts by mass per 100.0 parts by mass of the cured silane compound in the hard coat layer.
Various performances of the photocatalyst hard coat film thus obtained were measured and evaluated. The results are given in Table 1.

### Comparative Example 5

The procedure in Example 1 was repeated to prepare a photocatalyst hard coat film except that the thickness of the hard coat layer was altered from 1.5 to 1.0 µm.
Various performances of the photocatalyst hard coat film thus obtained were measured and evaluated. The results are given in Table 1.

### Comparative Example 6

The procedure in Example 1 was repeated to prepare a photocatalyst hard coat film except that the thickness of the hard coat layer was altered from 1.5 to 2.0 µm.
Various performances of the photocatalyst hard coat film thus obtained were measured and evaluated. The results are given in Table 1.
In Table 1, "Comp. Example" Represents "Comparative Example".

**Table 1 - 1**

| | Conditions of Coat Layer | | | |
|---|---|---|---|---|
| | Primer layer | | Hard coat layer | |
| | linear expansion coefficient (K⁻¹) | thickness (µm) | Amount of added ATO(parts by mass) | Thickness (µm) |
| Example 1 | 7.71 × 10 ⁻³ | 4.0 | 54.0 | 1.5 |
| Example 2 | 3.82 × 10 ⁻³ | 4.0 | 54.0 | 1.5 |
| Example 3 | 7.71 × 10⁻³ | 4.0 | 32.4 | 1.5 |
| Example 4 | 7.71 × 10⁻³ | 4.0 | 54.0 | 1.3 |
| Example 5 | 7.71 × 10⁻³ | 4.0 | 54.0 | 1.8 |
| Example 6 | 7.71 × 10⁻³ | 3.5 | 54.0 | 1.5 |
| Example 7 | 7.71 × 10⁻³ | 6.0 | 54.0 | 1.5 |
| Comp. Example 1 | 0.56 × 10 ⁻³ | 4.0 | 54.0 | 1.5 |
| Comp. Example 2 | 7.95 × 10⁻³ | 4.0 | 54.0 | 1.5 |
| Comp. Example 3 | 7.71 × 10⁻³ | 4.0 | 10.8 | 1.5 |
| Comp. Example 4 | 7.71 × 10⁻³ | 4.0 | 86.4 | 1.5 |
| Comp. Example 5 | 7.71 × 10⁻³ | 4.0 | 54.0 | 1.0 |
| Comp. Example 6 | 7.71 × 10⁻³ | 4.0 | 54.0 | 2.0 |

**Table 1 - 2**

| | Performance | | | | |
|---|---|---|---|---|---|
| | Hydrophilization time (hr) | Crack occurrence time derived from accelerated weather resistance test (hr) | After 1900 hours from accelerated weather resistance test | | |
| | | | Adhesivness | Hard coat property | Contact angle (degrees) |
| Example 1 | 12 | 2300 | 0 | ○ | 5< |
| Example 2 | 12 | 2000 | 0 | ○ | 5< |
| Example 3 | 12 | 2000 | 0 | ○ | 5< |
| Example 4 | 12 | 2000 | 0 | ○ | 5< |
| Example 5 | 12 | 2000 | 0 | ○ | 5< |
| Example 6 | 12 | 2300 | 0 | ○ | 5< |
| Example 7 | 12 | 2000 | 0 | ○ | 5< |
| Comp. Example 1 | 12 | 500 | - | - | - |
| Comp. Example 2 | 12 | 1000 | - | - | - |
| Comp. Example 3 | 12 | 2000 | 4 | × | 5< |
| Comp. Example 4 | 40 | 1500 | - | - | - |
| Comp. Example 5 | 12 | 2000 | 0 | × | 5< |
| Comp. Example 6 | 12 | 400 | - | - | - |

## Claims

1. A photocatalyst hard coat film which comprises a substrate, a primer layer, a hard coat layer and a photocatalyst layer, said three layers being laminated in turn with either surface of the substrate, wherein the primer layer has a thickness of 3.0 to 20.0 *µ*m and a linear expansion coefficient of 3.0 × 10 ⁻³ to 7.9 × 10 ⁻³ (K⁻¹) when the temperature thereof is raised to 100°C from 80 °C, and the hard coat layer comprises a cured silane compound and 20 to 70 parts by mass of metal oxide particulates based on 100 parts by mass of the silane compound and has a thickness of 1.2 to 1.9 *µ* m.

2. The photocatalyst hard coat film as set forth in Claim 1, wherein the substrate is a film composed of polycarbonate.

3. The photocatalyst hard coat film as set forth in Claim 1 or 2, wherein the primer layer is a layer which is formed of an acrylic primer.

4. The photocatalyst hard coat film as set forth in any of Claims 1 to 3, wherein the hard coat layer is a layer which is formed by the use of tetraalkoxysilane as a silane compound and antimony-doped tin oxide as metal oxide particulates.

5. The photocatalyst hard coat film as set forth in any of Claims 1 to 4, wherein the photocatalyst layer is a layer which is formed by the use of a silane compound as a binder and titanium dioxide as a photocatalyst.

6. The photocatalyst hard coat film as set forth in any of Claims 1 to 5, wherein a pressure sensitive adhesive layer is installed on the other surface of the substrate.
